# NEUE EUROPÄISCHE PATENTSCHRIFT

(11) **EP 1 759 434 B2**
(45) Veröffentlichungstag und Bekanntmachung des Hinweises auf die Entscheidung über den Einspruch: **20.01.2016**
(45) Hinweis auf die Patenterteilung: 23.12.2009
(21) Anmeldenummer: 05756087.2
(22) Anmeldetag: 04.06.2005
(51) Int. Cl.: H01M 8/24, H01M 8/10, H01M 8/02

(54) **MEMBRAN-ELEKTRODEN-MODUL (MEA) FÜR EINE BRENNSTOFFZELLE**
MEMBRANE ELECTRODE ASSEMBLY (MEA) FOR A FUEL CELL
MODULE MEMBRANE-ELECTRODE (MEA) POUR PILE A COMBUSTIBLE

(30) Priorität: 10.06.2004 DE 102004028141
(43) Veröffentlichungstag der Anmeldung: 07.03.2007
(73) Patentinhaber: elcomax membranes GmbH, 81737 München (DE)
(72) Erfinder: HAUFE, Stefan, 37093 Göttingen (DE); REICHE, Annette, 37079 Göttingen (DE); KIEL, Suzana, 37073 Göttingen (DE); MÄHR, Ulrich, 14052 Berlin (DE); MELZNER, Dieter, 37075 Göttingen (DE)
(74) Vertreter: Grättinger Möhring von Poschinger Patentanwälte Partnerschaft
(86) Internationale Anmeldenummer: PCT/EP2005/006025
(87) Internationale Veröffentlichungsnummer: WO 2005/122316

(56) Entgegenhaltungen:
- EP-A- 1 403 949
- EP-A1- 0 499 593
- EP-A1- 0 589 850
- EP-A1- 0 967 674
- EP-A2- 1 241 724
- WO-A1-2004/015797
- WO-A2-01/18894
- WO-A2-2004/066428
- US- - 3 134 697
- US-A- 5 096 786
- US-A- 5 346 661
- US-A- 5 464 700
- US-A- 5 578 388
- US-B1- 6 309 772
- US-B1- 6 387 557
- WANG J.: 'High Temperature Proton Conducting Polymer Fuel Cells', Mai 1996, UMI DISSERTATION SERVICES, MICHIGAN Seiten 1 - 114
- WANG J.: 'High Temperature Proton Conducting Polymer Fuel Cell', Mai 1996, UMI DISSERTATION SERVICES, MICHIGAN Seite 64
- QINGFENG L. ET AL: 'Phosphoric acid doped polybenzimidazole membranes: Physiochemical characterization and fuel cell applications' JOURNAL OF APPLIED ELECTROCHEMISTRY Bd. 31, 01 Januar 2001, Seiten 773 - 779
- WANG J.-T. ET AL: 'A H²/o² Fuel Cell using Acid doped Polybenzimidazole as Polymer Electrolyte' ELECTROCHIMICA ACTA Bd. 41, Nr. 2, 01 Februar 1996, Seiten 193 - 197
- POZIO A. ET AL: 'Membrane electrode gasket assembly (MEGA) technology for polymer electrolyte fuel cells' JOURNAL OF POWER SOURCES Bd. 112, Nr. 2, 14 November 2002, Seiten 491 - 496
- KORDESCH K.V. ET AL: 'Fuel Cells' ULLMANN'S ENCYCLOPEDIA OF INDUSTRIAL CHEMISTRY 1997, Seiten 1 - 56
- Versuchsergebnisse, eingereicht am 24. September 2009 für das Einspruchsverfahren zum europäischen Patent EP 1593 172

## Beschreibung

Die Erfindung bezieht sich auf eine Membran-Elektroden-Einheit (MEA: Membrane Electrode Assembly) für eine Brennstoffzelle, umfassend eine flächige Polymermembran, die in einem tangential innen liegenden Innenbereich beidseitig jeweils mit einer Elektrodenstruktur beschichtet ist und in einem tangential außen liegenden Außenbereich, der wenigstens einseitig über die Elektrodenstruktur-Beschichtung hinausragt, mit einem Dichtungskörper verbunden ist.

Die Erfindung bezieht sich weiter auf einen Brennstoffzellen-Stapel, umfassend eine Mehrzahl von Membran-Elektroden-Einheiten (MEAs), die jeweils zwischen Separatorplatten (Bipolar- oder Monopolarseparatoren) angeordnet sind, wobei jede MEA eine flächige Polymermembran umfasst, die in einem tangential innen liegenden Innenbereich beidseitig jeweils mit einer Elektrodenstruktur beschichtet ist und die einen tangential außen liegenden, über die Elektrodenstruktur hinausragenden Außenbereich aufweist.

Es sind unterschiedliche Typen von Brennstoffzellen bekannt. Insbesondere bei sogenannten Polymerelektrolytmembran-Brennstoffzellen (PEMFCs Proton Elektrolyte Membrane Fuel Cells) ist eine protonenleitfähige Membran vorgesehen, die beidseitig von Elektroden kontaktiert wird. Die Elektroden umfassen üblicherweise eine katalytisch aktive Schicht, beispielsweise aus platinbeschichtetem Ruß, welche in direktem Kontakt mit der Membran steht, sowie poröse, elektronisch leitfähige Strukturen, die dem Transport der Reaktionsgase zu der katalytisch aktiven Schicht dienen. Letztgenannte Strukturen werden üblicherweise als Gasdiffusionsstrukturen bezeichnet. Sie können beispielsweise aus einem poröse Kohlenstoffpapier, -gewebe oder -vlies aufgebaut sein.

Zum Betrieb der Brennstoffzelle wird der als Anode wirkenden Elektrode Wasserstoffgas oder wasserstoffhaltiges Gas zugeführt. Die genaue Zusammensetzung des Gases hängt von der speziellen Beschaffenheit der übrigen Brennstoffzelle ab. Gleichzeitig wird der zweiten, als Kathode wirkenden Elektrode Sauerstoffgas oder sauerstoffhaltiges Gas zugeführt. Die vorgenannten Gase sollen im Folgenden zusammenfassend als "Reaktionsgase" bezeichnet werden.

### An der Anode wird der Wasserstoff katalytisch oxidiert:

H₂→2H⁺+2e⁻.

Die dabei freiwerdenden Elektronen werden über die Elektrode an den Verbrauer abgeführt und die entstehenden Protonen wandern durch den Elektrolyten auf die Kathodenseite, wo sie mit Sauerstoff zu Wasser umgesetzt werden. Die notwendigen Elektronen werden über die Elektrode zugeführt:

½O₂ + 2H⁺+ 2e⁻→H₂O.

Der Ladungstransport durch den Elektrolyten erfolgt im Falle der PEMFC beispielsweise über Migration von H₃O⁺-Ionen und/oder Hoppingprozesse von Protonen. Um dies zu erreichen, ist es bei den meisten zur Anwendung kommenden Polymermembranen erforderlich, diese mit einem Dotierungsmittel zu dotieren. Ein häufig verwendetes Dotierungsmittel ist beispielsweise Phosphorsäure (H₃PO₄). Andere Membranen werden durch die Aufnahme von Wasser ausreichend ionenleitfähig.

Durch die Dotierung quellen jedoch Polymermembranen und verlieren an Stabilität. Dies macht die weitere Handhabung ausgesprochen schwierig.

Beispielsweise erschwert sich die für den Aufbau eines Brennstoffzellen-Stapels besonders günstige Anbringung eines Dichtungskörpers im Randbereich der Polymermembran. Aus der JP 03331873 A1, in der eine gattungsgemäße MEA offenbart wird, wird eine Maßnahme zur Umgehung dieses Problems beschrieben. Bei der dort offenbarten MEA ist die Polymermembran in ihrem Außenbereich nur einseitig nicht mit einer Elektrodenstruktur versehen. D.h., die Elektrodenstruktur auf der anderen Seite der Polymermembran erstreckt sich bis zu deren Rand und bedeckt auch den Randbereich. Hierdurch wird eine ausreichende Stabilität der MEA erzeugt, so dass sie mit der freiliegenden Fläche der Polymermembran stoffschlüssig mit einem Dichtungskörper verbunden werden kann. Die Stabilisierung der instabilen Polymermembran erfolgt also durch die Elektrodenstruktur, die sich weit über den eigentlich elektrochemisch aktiven Innenbereich der MEA hinaus nach außen erstreckt. Diese Maßnahme hat mehrere Nachteile. Zum einen ist die Vergrößerung der Elektrodenfläche mit hohen Kosten verbunden, da das Elektrodenmaterial, z.B. platinbeschichteter Ruß teuer ist. Zweitens werden dem ansonsten erstrebenswerten Ziel, eine möglichst dünne Elektrodenschicht zu verwenden, durch die erhöhten Stabilitätsanforderungen an die Elektrodenschicht enge Grenzen gesetzt. Schließlich ist diese Konstellation auch elektrochemisch ungünstig, da die aktive Fläche der MEA nicht genau bestimmt ist. Vielmehr erstreckt sie sich auf einer Seite der Polymermembran über eine deutlich größere Fläche als auf der anderen Seite, was zu Problemen beim Ionentransport und Querströmen führen kann.

Als Alternative zur Anbringung eines Dichtungskörpers an der MEA selbst ist es auch bekannt, Dichtungsmaterial an den Separatorplatten eines Brennstoffzellen-Stapels anzubringen und hochflexible, dotierte MEAs, deren Polymermembranen im Randbereich beidseitig unbeschichtet sind, so zwischen den Separatorplatten anzuordnen, dass die überstehenden Membranbereiche mit dem Dichtungsmaterial wechselwirken. Ein derartiger, gattungsgemäßer Brennstoffzellen-Stapel ist aus der DE 101 21 176 bekannt. Auch die DE 102 51 439 A1 offenbart einen entsprechenden Brennstoffzellen-Stapel. Nachteilig hierbei ist jedoch die Kompliziertheit des Stapel-Aufbaus aufgrund der Notwendigkeit zusätzlichen Dichtungsmaterials und der schwierigen Handhabbarkeit der mechanisch hochempfindlichen MEAs.

Es ist eine Aufgabe der vorliegenden Erfindung eine gattungsgemäße MEA derart weiterzubilden, dass ihre Stabilität erhöht und die Dicke der Elektrodenbeschichtung minimiert werden kann, so dass die Herstellungskosten gesenkt werden können.

Diese Aufgabe wird in Verbindung mit den Merkmalen des Oberbegriff von Anspruch 1 unter anderem dadurch gelöst, dass die Polymermembran mit einem Randbereich in den Dichtungskörper aus Elastomer-Material eingebettet ist und sich der Dichtungskörper nach tangential innen bis in einen tangential zwischen dem Außenbereich und dem Innenbereich liegenden Übergangsbereich hinein erstreckt, in dem er die Elektrodenstrukturen auf beiden Seiten der Polymermembran normal außen überlappt.

Es ist eine weitere Aufgabe der erfindungsgemäßen Vorrichtung, einen gattungsgemäßen Brennstoffzellen-Stapel derart weiter zu bilden, dass sein Aufbau vereinfacht wird.

Diese Aufgabe wird in Verbindung mit den Merkmalen des Oberbegriffes von Anspruch 9 unter anderem dadurch gelöst, dass jede Polymermembran mit einem Randbereich stoffschlüssig in einen Dichtungskörper aus Elastomer-Material eingebettet ist und sich der Dichtungskörper nach tangential innen bis in einen tangential zwischen dem Außenbereich und dem Innenbereich liegenden Übergangsbereich hinein erstreckt, in dem er die Elektrodenstrukturen auf beiden Seiten der Polymermembran normal außen überlappt.

Die Wirkungen und Vorteile der Erfindung sollen im Folgenden für die erfindungsgemäßen MEAs und die erfindungsgemäßen Brennstoffzellen-Stapel gemeinsam diskutiert werden.

Erfindungsgemäß wird die Stabilisierungsfunktion von dem Dichtungskörper aus Elastomer-Material übernommen, in welchen der Randbereich der Polymermembran beidseitig eingebettet ist. Allerdings erstreckt sich der Dichtungskörper so weit nach tangential innen, dass er, vorzugsweise geringfügig, mit dem Randbereich der Elektrodenstrukturen auf beiden Seiten der Polymermembran überlappt. Auf diese Weise ist ein sicherer Übergang zwischen dem Elektroden-stabilisierten Innenbereich der MEA, der gleichzeitig ihrem elektrochemisch aktiven Bereich entspricht, und dem Dichtkörper-stabilisierten Außenbereich der MEA gegeben.

Besonders günstige Ausführungsformen der Erfindung sind in den abhängigen Ansprüchen dargelegt.

Vorzugsweise umgibt der Dichtkörper den Innenbereich der Polymermembran rahmenartig und vollständig. Auf diese Weise wird ein dichtendes MEA-Modul geschaffen; das formstabil ist und daher leicht zwischen Separatorplatten beim Aufbau eines Brennstoffzellen-Stapels eingebaut werden kann. Außerdem kann auf diese Weise auf zusätzliche Dichtungsmaterialien verzichtet werden.

Besonders bevorzugt wird das Elastomer-Material des Dichtkörpers an die Polymermembran angegossen. Andere Verbindungsmethoden, wie etwa Kleben, Schweißen oder Heißverpressen sind jedoch ebenfalls anwendbar.

Bei der Erfindung ist vorgesehen, dass der Innenbereich der Polymermembran und der Übergangsbereich mit einem Dotierungsmittel dotiert sind, wobei die Konzentration des Dotierungsmittel im Übergangsbereich nach tangential außen abfällt. Mit der Abnahme der Konzentration des Dotierungsmittels nimmt die Protonenleitfähigkeit nach Außen ab, die mechanische Stabilität der Polymermembran hingegen zu. Die Herstellung der erfindungsgemäßen MEA kann dadurch deutlich vereinfacht werden. Falls nämlich vorgesehen ist, dass die Dotierung bereits vor der Anbringung des Dichtungskörpers erfolgt, weist der Außenbereich der Membran, der in den Dichtungskörper einzubetten ist, eine gute Stabilität auf, so dass die Handhabung während des Einbettungsprozesses, beispielsweise eines Umspritzens mit Elastomer-Material, keine besonderen Schwierigkeiten aufweist. Bei einer weiteren Ausführungsform kann die Dotierung der Membran über die Elektroden nach dem Aufbringen des Dichtkörpers erfolgen. Günstigerweise besteht die Polymermembran aus Polybenzimidazole.

Erfindungsgemäß enthält das Dotierungsmittel Phosphorsäure (H₃PO₄).

Beim Einbau der erfindungsgemäßen MEAs in einen Brennstoffzellen-Stapel können Unebenheiten einzelner Elemente durch die elastischen Eigenschaften des ElastomerMaterials ausgeglichen werden. Um außerdem ein zu starkes Komprimieren des MEA-Moduls beim Verpressen des Brennstoffzellen-Stapels zu vermeiden, ist bei einer besonders bevorzugten Ausführungsform der Erfindung vorgesehen, dass in den Dichtkörper im Vergleich zu dessen Elastomer-Material unelastische Abstandshalterstrukturen eingebettet sind. Diese Strukturen wirken einer zu starken Kompression des Dichtkörpers entgegen, ohne jedoch seine ausgleichenden, elastischen Eigenschaften zu stark zu beeinträchtigen. Beispielsweise können Stege oder Bügel aus Metall, Kunststoff oder Kohlenstoff verwendet werden, die im Vergleich zu dem Elastomer-Material deutlich steifer sind. Entsprechende Abstandshalterstrukturen können auch in den Separatorplatten integriert sein.

Bei einer günstigen Weiterbildung der Erfindung ist vorgesehen, dass die Polymermembran und der Dichtkörper im Außenbereich Durchbrüche zur Durchleitung von Reaktionsgasen oder Kühlmittel aufweisen. Derartige Durchbrüche, die mit entsprechenden Durchbrüchen in den Separatorplatten korrespondieren, können als Gas- bzw. Fluidkanäle verwendet werden, die sich axial durch den Brennstoffzellen-Stapel erstrecken, so dass eine separate Versorgung jeder Einzelzelle des Stapels mit Reaktionsgas und / oder Kühlmittel nicht erforderlich ist. Günstigerweise ist vorgesehen, dass der Dichtkörper normal außen Dichtstrukturen zur dichtenden Wechselwirkung mit benachbarten Elementen in einem Brennstoffzellen-Stapel aufweist. Dabei kann es sich beispielsweise um Dichtlippen oder Dichtnuten handeln. Diese können beispielsweise den elektrochemisch aktiven Innenbereich der MEA rahmenartig umgeben, um ein Austreten des über die Elektroden zugeführten Reaktionsgases nach außen zu verhindern. Im Fall, dass Membran und Dichtkörper durchsetzende Durchbrüche zur Gas- bzw. Fluidleitung vorgesehen sind, können derartige Dichtungsstrukturen die Durchbrüche etwa ringförmig umgeben, um so ein Austreten des geleiteten Gases bzw. Fluids zu verhindern.

Weitere Wirkungen und Vorteile ergeben sich aus der nachfolgenden, speziellen Beschreibung im Zusammenhang mit den beigefügten Zeichnungen, in denen
- Figur 1:: eine schematische Querschnittsansicht durch ein erfindungsgemäßes MEA-Modul zeigt,
- Figur 2:: schematisch den Graphen der Dotierungskonzentration über die Ausdehnung des MEA-Moduls von Fig. 1 zeigt und
- Figur 3:: eine schematische Darstellung eines Brennstoffzellen-Stapels unter Verwendung der erfindungsgemäßen MEA-Module zeigt.

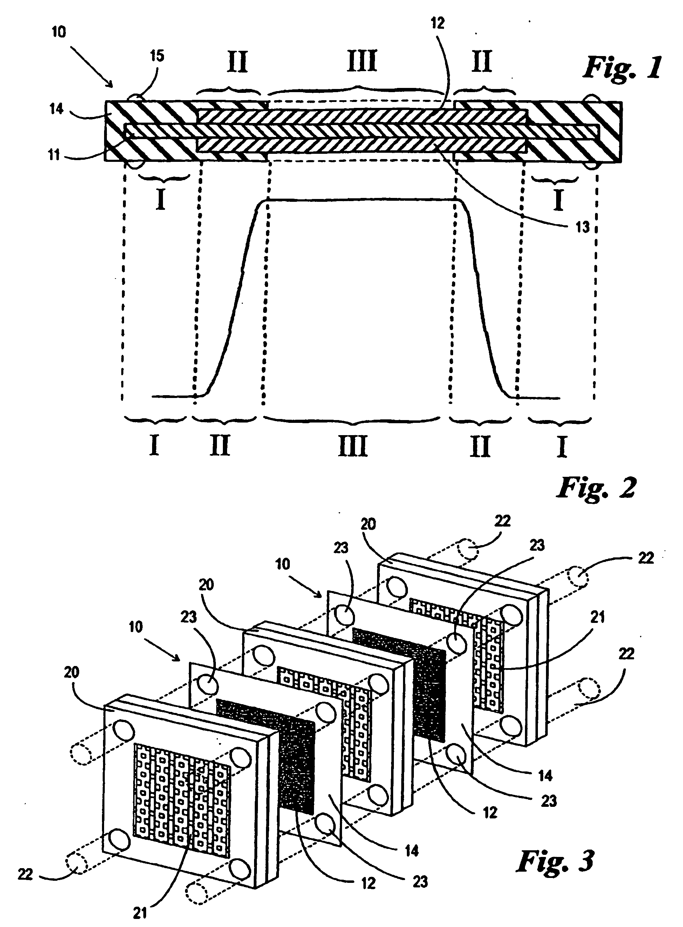

In Figur 1 sind die einzelnen Elemente und Bereiche eines erfindungsgemäßen MEA-Moduls 10 schematisch als Querschnittsansicht dargestellt. Herzstück des Moduls ist die eigentliche MEA, bestehend aus der Polymermembran 11 und den Elektrodenstrukturen 12 und 13, die auf jeweils einer Seite der Polymermembran 11 aufgebracht sind. In einem Außenbereich I (siehe auch Fig. 2) ragt die Membran 11 über die Elektrodenstruktur-Beschichtung 12, 13 hinaus. Sie ist dort stoffschlüssig in einen Rahmen 14 aus Elastomer-Material eingebettet. Die Einbettung erfolgt vorzugsweise durch Umspritzen oder Angießen. Ein innerer Bereich III der MEA 11, 12, 13, der auch der elektrochemisch aktiven Fläche der MEA entspricht, ist frei von dem Elastomer-Material des Rahmens 14. In diesem Bereich erfolgt die Zuleitung der Reaktionsgase zu den Elektrodenstrukturen 12, 13, die katalytische Reaktion sowie der Ionentransport durch die Membran 11.

In einem Übergangsbereich II sind die Randbereiche der Elektrodenstrukturen 12, 13 stoffschlüssig in den Elastomer-Rahmen 14 eingebettet.

Fig. 2 zeigt die Konzentrationsverteilung eines Dotierungsmittels, beispielsweise Phosphorsäure, in ihrer räumlichen Verteilung über die unterschiedlichen Bereiche I, II und III. Im aktiven Bereich III ist die Konzentration besonders hoch. Hier muss der Ionentransport durch die Membran 11 sichergestellt werden. In den Außenbereichen I ist es hingegen wünschenswert, keine Dotierung der Membran 11 vorliegen zu haben, da in diesem Bereich die Membran 11 zumindest vor Einbettung in den Elastomer-Rahmen 14 freitragend vorliegt und im Falle der Dotierung in diesem Bereich stark an mechanischer Stabilität verliert, was die Handhabung erschwert. Bei der in Fig. 2 dargestellten, bevorzugten Ausführungsform fällt daher die Konzentration des Dotierungsmittels im Übergangsbereich II nach tangential außen hin ab, insbesondere von der Maximalkonzentration im aktiven Bereich III auf Null im Außenbereich I. Im Übergangsbereich II findet praktisch keine elektrochemische Reaktion statt, da in diesem Bereich kein Reaktionsgas durch den dichtenden Elastomer-Rahmen zugeführt werden kann. Lediglich im grenznahen Gebiet zum aktiven Bereich III, wo durch die Elektrodenstrukturen 12, 13 noch Reaktionsgas in den Übergangsbereich II diffundieren kann, kann auch die elektrochemische Reaktion (mit nach tangential außen abfallender Stärke) stattfinden. In vergleichbaren Maße wie die Konzentration nach tangential außen hin abfällt, nimmt die Stabilität der Membran 11 zu. Da die Membran 11 in diesem Bereich sowohl von den Elektrodenstrukturen 12 und 13 wie auch von Teilen des Elastomer-Rahmen 14 stabilisiert wird, ist das Modul 10 insgesamt stabil und leicht handhabbar.

Bei der Ausführungsform von Figur 1 sind im äußeren Randbereich des Elastomer-Rahmens 14 normal außen Dichtlippen 15 angeordnet, die beim Einbau der Elastomer-Module 10 in einen Brennstoffzellen-Stapel mit benachbarten Strukturen in dichtende Wechselwirkung treten.

Ein schematisches Beispiel für einen Brennstoffzellen-Stapel ist in Fig. 3 dargestellt. MEA-Module 10 sind hier zwischen Bipolarplatten 20 angeordnet, die in ihrem, dem aktiven Bereich III der MEA entsprechenden Innenbereich 21 Kanalstrukturen aufweisen, über die den Elektroden 12 und 13 (letztere in Fig. 3 nicht sichtbar) Reaktionsgas zugeführt wird. Weiter in Fig. 3 dargestellt sind Gas- bzw. Fluidkanäle 22, die den Brennstoffzellen-Stapel axial durchsetzen. Sie sind, wie bei dem Ausführungsbeispiel von Fig. 3, vorzugsweise im Außenbereich I der Meta-module angeordnet, wo diese entsprechende Durchbrüche aufweisen. Durch die dichtende Wirkung des Elastomer-Rahmens 14, günstigerweise unterstützt durch (in Fig. 3 nicht dargestellte) Dichtungsstrukturen, wie etwa Dichtlippen, kann der Transport von Reaktionsgasen und / oder Kühlmittel längs der Stapelachse sichergestellt werden. Natürlich zeigen die dargestellten und im speziellen beschriebenen Ausführungsformen der Erfindung lediglich illustrative Beispiele. Insbesondere hinsichtlich der Materialwahl für den Elastomer-Rahmen hat der Fachmann ein breites Spektrum zur Verfügung. Beispielsweise eigenen sich die folgenden Materialien u.a. aufgrund ihrer guten Hitzebeständigkeit für die Ausbildung erfindungsgemäßer Elastomer-Rahmen 14: Ethylen-Propylen-Dien-Kautschuk, Silikon-Kautschuk, Fluor-Silikon-Kautschuk, FluorKautschuk, Fluor-Karbon-Kautschuk und Perfluor-Kautschuk.

## Patentansprüche

1. Membran-Elektroden-Einheit (MEA) für eine Brennstoffzelle, umfassend eine flächige, wenigstens bereichsweise mit einem Dotierungsmittel dotierte Polymermembran (11), die
- in einem tangential innen liegenden Innenbereich (III) beidseitig jeweils mit einer Elektrodenstruktur (12, 13) beschichtet ist,
- in einem tangential außen liegenden Außenbereich (I), der wenigstens einseitig über die Elektrodenstruktur (12, 13) hinausragt, mit einem Dichtungskörper (14) verbunden ist und
- mit einem Randbereich in den Dichtungskörper (14) aus Elastomer-Material eingebettet ist, der sich nach tangential innen bis in einen tangential zwischen dem Außenbereich (I) und dem Innenbereich (III) liegenden Übergangsbereich (II) hinein erstreckt, in dem er die Elektrodenstrukturen (12, 13) auf beiden Seiten der Polymemembran (11) normal außen überlappt,
**dadurch gekennzeichnet,**
**dass** jeweils der Innenbereich (III) der Polymermembran (11) und der Übergangsbereich (II) mit dem Dotierungsmittel dotiert sind, wobei die Konzentration des Dotierungsmittels im Übergangsbereich (II) nach tangential außen abfällt
und
**dass** das Dotierungsmittel Phosphorsäure (H₃PO₄) enthält.

2. MEA nach einem der vorangehenden Ansprüche,
**dadurch gekennzeichnet,**
**dass** der Dichtungskörper (14) den Innenbereich (III) der Polymermembran (11) tangential außen rahmenartig vollständig umgibt.

3. MEA nach einem der vorangehenden Ansprüche,
**dadurch gekennzeichnet, dass** die Polymermembran (11) in dem Aussenbereich (I) durch Adhäsion mit dem Dichtungskörper (14) verbunden ist.

4. MEA nach Anspruch 3,
**dadurch gekennzeichnet,**
**dass** das Elastomer-Material an die Polymermembran (11) angegossen ist.

5. MEA nach einem der vorangehenden Ansprüche,
**dadurch gekennzeichnet,**
**dass** die Polymermembran (11) aus Polybenzimidazol besteht.

6. MEA nach einem der vorangehenden Ansprüche,
**dadurch gekennzeichnet,**
**dass** in den Dichtkörper (14) im Vergleich zu dessen Elastomer-Material unelastische Abstandshalterstrukturen eingebettet sind.

7. MEA nach einem der vorangehenden Ansprüche,
**dadurch gekennzeichnet,**
**dass** die Polymermembran (11) und der Dichtkörper (14) im Außenbereich (I) Durchbrüche (23) zur Durchleitung von Reaktionsgasen oder Kühlmittel aufweisen.

8. MEA nach einem der vorangehenden Ansprüche,
**dadurch gekennzeichnet,**
**dass** der Dichtkörper (14) normal außen Dichtungsstrukturen (15) zur dichtenden Wechselwirkung mit benachbarten Elementen in einem Brennstoffzellen-Stapel aufweist.

9. Brennstoffzellen-Stapel, umfassend eine Mehrzahl von
Membran-Elektroden-Einheiten (MEAs) (10), die jeweils zwischen Separatorplatten (20) angeordnet sind, wobei jede MEA eine flächige, wenigstens bereichsweise mit einem Dotierungsmittel dotierte Polymermembran (11) umfasst, die
- in einem tangential innen liegenden Innenbereich (III) beidseitig jeweils mit einer Elektrodenstruktur (12, 13) beschichtet ist,
- einen tangential außen liegenden, über die Elektrodenstruktur-Beschichtung (12, 13) hinausragenden Außenbereich (I) aufweist und
die mit einem Randbereich (I) stoffschlüssig in einen Dichtungskörper (14) aus Elastomer-Material eingebettet ist, der sich nach tangential innen bis in einen tangential zwischen dem Außenbereich (I) und dem Innenbereich (III) liegenden Übergangsbereich (II) hinein erstreckt, in dem er die Elektrodenstrukturen (12, 13) auf beiden Seiten der Polymermembran (11) normal außen überlappt,
**dadurch gekennzeichnet, dass**
jeweils die Innenbereiche (III) der Mehrzahl von Polymermembranen (11) und die entsprechenden Übergangsbereiche (II) mit dem Dotierungsmittel dotiert sind, wobei die Konzentration des Dotierungsmittels in den Übergangsbereichen (II) nach tangential außen abfällt
und dass
das Dotierungsmittel Phosphorsäure (H₃PO₄) enthält.

10. Brennstoffzellen-Stapel nach Anspruch 9, **dadurch gekennzeichnet,**
**dass** der Dichtungskörper (14) den Innenbereich (III) der Polyermembran rahmenartig vollständig umgibt.

11. Brennstoffzellen-Stapel nach einem der Ansprüche 9 bis 10, **dadurch gekennzeichnet, dass** die Polymermermbran (11) in dem Außenbereich (I) durch Adhäsion mit dem Dichtungskörper(14) verbunden ist.

12. Brennstoffzellen-Stapel nach Anspruch 11,
**dadurch gekennzeichnet,**
**dass** das Elastomer-Material an die Polymermembran (11) angegossen ist.

13. Brennstoffzellen-Stapel nach einem der Ansprüche 9 bis 12,
**dadurch gekennzeichnet, dass**
die Polymermembranen (11) aus Polybenzimidazol bestehen.

14. Brennstoffzellen-Stapel nach einem der Ansprüche 9 bis 13,
**dadurch gekennzeichnet,**
**dass** in jeden Dichtkörper (14) im Vergleich zu dessen Elastomer-Material unelastische Abstandshalterstrukturen eingebettet sind.

15. Brennstoffzellen-Stapel nach einem der Ansprüche 9 bis 14,
**dadurch gekennzeichnet,**
**dass** Kanäle (22) zur Leitung von Reaktionsgasen und /oder Kühlmittel vorgesehen sind, die den Brennstoffzellen-Stapel in einem dem Außenbereich (I) der Polymermembranen (11) entsprechenden Bereich in axialer Richtung durchsetzen, wobei jeder Dichtkörper (14) Dichtungsstrukturen aufweist, die jeden ihn durchsetzenden Kanal (22) umgeben und in dichtender Wechselwirkung mit der jeweils benachbarten Separatorplatte (20) stehen.

## Claims

1. A membrane electrode assembly (MEA) for a fuel cell, comprising a flat polymer membrane (11) which is doped at least in regions with a dopant and
- is coated with an electrode structure (12, 13) on both sides in each case in a tangentially internally located inner region (III),
- is connected to a sealing body (14) in a tangentially externally located outer region (I) which projects beyond the electrode structure (12, 13) at least on one side and
- is embedded with an edge region in the sealing body (14) consisting of elastomer material which extends tangentially inwards into a transition region (II) which is situated tangentially between the outer region (I) and the inner region (III) and in which it overlaps the electrode structures (12, 13) normally outwards on both sides of the polymer membrane (11),
**characterised in that**
in each case the inner region (III) of the polymer membrane (11) and the transition region (II) are doped with the dopant, wherein the concentration of the dopant in the transition region (II) decreases tangentially outwards, and that the dopant contains phosphoric acid (H₃PO₄).

2. The MEA according to one of the preceding claims,
**characterised in that**
the sealing body (14) completely surrounds the inner region (III) of the polymer membrane (11) in a frame-like manner tangentially on the outside.

3. The MEA according to one of the preceding claims,
**characterised in that**
the polymer membrane (11) in the outer region (I) is connected by adhesion to the sealing body (14).

4. The MEA according to Claim 3,
**characterised in that**
the elastomer material is moulded onto the polymer membrane (11).

5. The MEA according to one of the preceding claims,
**characterised in that**
the polymer membrane (11) consists of polybenzimidazole.

6. The MEA according to one of the preceding claims,
**characterised in that**
spacer structures which are inelastic compared to the elastomer material of the sealing body are embedded in the sealing body (14).

7. The MEA according to one of the preceding claims,
**characterised in that**
the polymer membrane (11) and the sealing body (14) have breaks (23) for passing through reaction gases or coolant in the outer region (I).

8. The MEA according to one of the preceding claims,
**characterised in that**
the sealing body (14) has sealing structures (15) normally on the outside for sealing interaction with adjacent elements in a fuel cell stack.

9. A fuel cell stack, comprising a plurality of membrane electrode assemblies (MEAs) (10), which are in each case arranged between separator plates (20), wherein each MEA comprises a flat polymer membrane (11) which is doped with a dopant at least in regions on both sides and
- is coated with an electrode structure (12, 13) on both sides in each case in a tangentially internally located inner region (III),
- has a tangentially externally located outer region (I) which projects beyond the electrode structure coating (12, 13) and
which is materially embedded with an edge region (I) in a sealing body (14) consisting of elastomer material which extends tangentially inwards into a transition region (II) which is situated tangentially between the outer region (I) and the inner region (III) and in which it overlaps the electrode structures (12, 13) normally outwards on both sides of the polymer membrane (11),
**characterised in that**
in each case the inner regions (III) of the plurality of polymer membranes (11) and the corresponding transition regions (II) are doped with the dopant, wherein the concentration of the dopant in the transition regions (II) decreases tangentially outwards and that the dopant contains phosphoric acid (H₃PO₄).

10. The fuel cell stack according to Claim 9,
**characterised in that**
the sealing body (14) completely surrounds the inner region (III) of the polymer membrane in a frame-like manner.

11. The fuel cell stack according to one of Claims 9 to 10,
**characterised in that**
the polymer membrane (11) in the outer region (I) is connected by adhesion to the sealing body (14).

12. The fuel cell stack according to Claim 11,
**characterised in that**
the elastomer material is moulded onto the polymer membrane (11).

13. The fuel cell stack according to one of Claims 9 to 12
**characterised in that**
the polymer membranes (11) consist of polybenzimidazole.

14. The fuel cell stack according to one of Claims 9 to 13
**characterised in that**
spacer structures which are inelastic compared to the elastomer material of the sealing body are embedded in each sealing body (14).

15. The fuel cell stack according to one of Claims 9 to 14
**characterised in that**
ducts (22) for conducting reaction gases and/or coolant are provided, which penetrate the fuel cell stack in the axial direction in a region which corresponds to the outer region (I) of the polymer membranes (11), wherein each sealing body (14) has sealing structures which surround each duct (22) which penetrates it and interact in a sealing manner with the respectively adjacent separator plate (20).

## Revendications

1. Unité membrane-électrode (UME) pour une pile à combustible, comprenant une membrane polymère (11) étendue en surface et au moins partiellement dopée avec un agent de dopage, ladite membrane étant
- dans une zone intérieure (III) située à l'intérieur dans le sens tangentiel, revêtue des deux côtés d'une structure constituant une électrode (12, 13),
- dans une zone extérieure (I) située à l'extérieur dans le sens tangentiel et dépassant au moins sur un côté ladite structure constituant une électrode (12, 13), reliée à un corps d'étanchéité (14) et - incorporée, avec une zone marginale, dans ledit corps d'étanchéité (14) en matériau elastomère qui s'étend vers l'intérieur, dans le sens tangentiel, jusque dans une zone de transition (II) située tangentiellement entre ladite zone extérieure (I) et ladite zone intérieure (III), où il dépasse les structures constituant une électrode (12, 13) sur les deux côtés de ladite membrane polymère (11) et cela à l'extérieur, dans le sens normal,
**caractérisée en ce que**
la zone intérieure (III) de la membrane polymère (11) et la zone de transition (II) sont chacune dopées avec ledit agent de dopage, la concentration de l'agent de dopage diminuant au sein de la zone de transition (II) vers d'extérieur, dans le sens tangentiel, et que ledit agent de dopage contient de l'acide phosphorique (H₃PO₄).

2. UME selon l'une des revendications précédentes,
**caractérisée en ce que**,
à l'extérieur, dans le sens tangentiel, le corps d'étanchéité (14) entoure complètement la zone intérieure (III) de la membrane polymère (11), à la façon d'un cadre.

3. UME selon l'une des revendications précédentes,
**caractérisée en ce que**, dans la zone extérieur (I), la membrane polymère (11) est reliée au corps d'étanchéité (14) par adhésion.

4. UME selon la revendication 3,
**caractérisée en ce que**
le matériau élastomère a été coulé de façon à épouser la forme de la membrane polymère (11).

5. UME selon l'une des revendications précédentes,
**caractérisée en ce que**
la membrane polymère (11) est constituée de polybenzimidazole.

6. UME selon l'une des revendications précédentes,
**caractérisée en ce que**,
des structures d'écartement dont l'élasticité est faible par rapport audit matériau élastique sont incorporées dans le corps étanche (14).

7. UME selon l'une des revendications précédentes,
**caractérisée en ce que**
la membrane polymère (11) et le corps étanche (14) présentent, dans la zone extérieure (I) des passages (23) destinés à faire passer des gaz de réaction ou des agents de refroidissement.

8. UME selon l'une des revendications précédentes,
**caractérisée en ce que**
le corps étanche (14) présente à l'extérieur, dans le sens normal, des structures d'étanchéité (15) faisant l'étanchéité en entrant en interaction avec les éléments adjacents au sein d'un empilement de piles à combustible.

9. Empilement de piles à combustible, comprenant une pluralité d'unités membrane-électrode (UMEs) (10) disposées chacune entre des plaques de séparation (20), chaque UME comprend une membrane polymère (11) étendue en surface et au moins partiellement dopée avec un agent de dopage, ladite membrane
- étant, dans une zone intérieure (III) située à l'intérieur dans le sens tangentiel, revêtue des deux côtés d'une structure constituant une électrode (12, 13),
- présentant une zone extérieure (I) située à l'extérieur dans le sens tangentiel et dépassant le revêtement par une structure constituant une électrode (12, 13) et
ayant une zone marginale (I) faisant corps avec un corps d'étanchéité (14) en matériau élastomère qui s'étend vers l'intérieur, dans le sens tangentiel, jusque dans une zone de transition (II) située tangentiellement entre la zone extérieure (I) et la zone intérieure (III), où il dépasse les structures constituant une électrode (12, 13) sur les deux côtés de la membrane polymère (11) et cela à l'extérieur, dans le sens normal,
**caractérisé en ce que**
chacune des zones intérieures (III) de la pluralité de membranes polymères (11) et les zones de transition (II) correspondantes étant dopées avec ledit agent de dopage, la concentration de l'agent de dopage diminuant au sein des zones de transition (II) vers d'extérieur, dans le sens tangentiel, et que ledit agent de dopage contient de l'acide phosphorique (H₃PO₄).

10. Empilement de piles à combustible selon la revendication 9, **caractérisé en ce que** le corps d'étanchéité (14) entoure complètement la zone intérieure (III) de la membrane polymère, à la façon d'un cadre.

11. Empilement de piles à combustible selon l'une des revendications 9 à 10, **caractérisé en ce que**,
dans la zone extérieur (I), la membrane polymère (11) est reliée au corps d'étanchéité (14) par adhésion.

12. Empilement de piles à combustible selon la revendication 11,
**caractérisé en ce que**
le matériau élastomère a été coulé de façon à épouser la forme de la membrane polymère (11).

13. Empilement de piles à combustible selon l'une des revendications 9 à 12,
**caractérisé en ce que**
les membranes polymères (11) sont constituées de polybenzimidazole.

14. Empilement de piles à combustible selon l'une des revendications 9 à 13,
**caractérisé en ce que**
dans chacun des corps étanches (14) sont incorporées des structures d'écartement dont l'élasticité est faible par rapport au matériau élastique de ces derniers.

15. Empilement de piles à combustible selon l'une des revendications 9 à 14,
**caractérisé en ce que**
des canaux (22) destinés au cheminement de gaz de réaction et/ou d'agent de refroidissement sont prévus, lesdits canaux traversant, dans le sens axial, ledit empilement de piles à combustible au sein d'une zone correspondant à la zone extérieure (I) des membranes polymère (11), chacun des corps étanches (14) présentant des structures d'étanchéité entourant chacun des canaux (22) le traversant et entrant en interaction avec leurs plaques de séparation (20) adjacentes respectives.
